# EUROPEAN PATENT APPLICATION

(11) **EP 4 538 678 A1**
(43) Date of publication of application: **16.04.2025**
(21) Application number: 23818221.6
(22) Date of filing: 01.03.2023
(51) Int. Cl.: G01N 21/01

(54) **ANALYSIS DEVICE**

(30) Priority: 07.06.2022 JP 2022092124
(71) Applicant: HITACHI HIGH-TECH CORPORATION, Tokyo 105-6409 (JP)
(72) Inventor: ANDO Takahiro, Tokyo 100-8280 (JP); ADACHI Sakuichiro, Tokyo 100-8280 (JP); KAWAKAMI Shoko, Tokyo 100-8280 (JP); KAWAHARA Tetsuji, Tokyo 105-6409 (JP); TAKAHASHI Takuya, Tokyo 105-6409 (JP); TANOUE Hidetsugu, Tokyo 105-6409 (JP); YOKOYAMA Koki, Tokyo 105-6409 (JP); AIHARA Hiroki, Tokyo 105-6409 (JP); FURUKAWA Akihiro, Tokyo 100-8280 (JP)
(74) Representative: MERH-IP Matias Erny Reichl Hoffmann Patentanwälte PartG mbB
(86) International application number: PCT/JP2023/007481
(87) International publication number: WO 2023/238457

(57) **Abstract**

Provided is an analysis device including a light-emitting diode (LED) light source capable of suppressing changes in an emission spectrum and a light amount and preventing condensation. The analysis device includes an LED light source (an excitation light LED 501, a phosphor 502, and an LED package 503) that generates light with which a sample is irradiated, an LED mounting board 504 on which the LED light source and a temperature sensor 505 are mounted, a lamp house 508 that surrounds a periphery of the LED mounting board 504 and contains the LED mounting board 504, a Peltier element 506 that absorbs heat of the LED mounting board 504 or dissipates heat to the LED mounting board 504, and a control unit that controls an output from the Peltier element 506 so that a temperature measured by the temperature sensor 505 becomes higher than a threshold temperature.

## Description

### Technical Field

The present disclosure relates to an analysis device including a light-emitting diode (LED) light source that generates light with which a sample is irradiated.

### Background Art

In an analysis device that measures the amount of components, such as protein, sugar, lipid, enzyme, hormone, inorganic ion, or disease marker, contained in a sample, such as blood or urine, a sample and a reagent are, in general, dispensed into containers for storing a liquid. Then, test items are analyzed based on changes in optical characteristics such as light absorption, fluorescence, and luminescence. In the absorption analysis with the analysis device, a following method is used. Light from a light source is emitted to a sample or a reaction solution obtained by mixing the sample and a reagent. Then a light receiving element measures the amount of transmitted light with a single or a plurality of measurement wavelengths, the transmitted light having passed through the sample or the reaction solution, to calculate absorbance. The amount of a component is obtained based on a relationship between the absorbance and concentration.

The light source for the absorption analysis desirably has a wide emission spectrum to cope with a large number of inspection items, and can stably obtain a certain or more light amount at a measurement wavelength in order to conduct highly accurate absorbance measurement. Therefore, conventionally, a xenon lamp, a halogen lamp, or the like has been used. These light sources can obtain a certain or more light amount, but in a case of being used in continuous lighting, the time until the light amount is stabilized is about 30 minutes which is comparatively long. Further, as the light amount is large, the energy consumption is also large, and the life is limited. For example, in a case of a halogen lamp, replacement in about 1000 hours is required, and the maintenance frequency of an analysis device increases.

In recent years, a light-emitting diode (LED) expected to have a long life has been studied as the light source for the absorption analysis. For example, in an automatic blood analysis device used for a clinical test, a reagent to be used and a wavelength of light vary depending on a component to be measured, and a wavelength range thereof is for example, 340 nm to 800 nm which is wide. Therefore, it is difficult to cover the entire wavelength band with one LED light. For this reason, for example, it is conceivable to use a plurality of LED elements or to use light emission from a phosphor that converts excitation light of a blue LED element to generate light in a long wavelength band.

PTL 1 discloses a technique of providing a phosphor on a light beam of an LED chip. The phosphor disclosed in PTL 1 is produced by firing a raw material containing at least alumina and at least one of Fe, Cr, Bi, Tl, Ce, Tb, Eu, and Mn, and containing 6.1 wt% to 15.9 wt% of sodium in the whole raw material.

In the case of using an LED as the light source for the absorption analysis, it is concerned that the emission spectrum and the light amount change depending on self-heating at the time of lighting or an environmental temperature, and thus the analysis accuracy is degraded. In order to prevent this concern, PTL 2 uses a temperature control block in which an LED metering unit and a reaction cell (a member that stores a sample or a reaction solution) comes in contact with each other. The LED is used to make the device compact, and the light-emitting element of the LED is fixed to a member having a large heat capacity to control a preheating temperature. As a result, light amount stability of a certain level or more can be obtained by maintaining the LED element at a temperature within a certain range without being affected by the outside air temperature and self-heating.

PTL 3 discloses a structure in which a lower surface of an LED package is connected to a Peltier element or a metal block having a channel therein and having good thermal conductivity in order to cool the lower surface and makes it constant to 25 ±0.1°C.

### Citation List

### Patent Literatures

PTL 1: JP 2020-87974 A
PTL 2: JP Patent No. 3964291
PTL 3: JP Patent No. 6637407

### Summary of Invention

### Technical Problem

In order to achieve the light amount stability required for the absorption analysis with an LED light source, the following three problems exist.

(i) In order to suppress changes in the emission spectrum and the light amount due to the self-heating at the time of lighting of the LED light source and the environmental temperature, it is necessary to make the periphery of the LED light source less susceptible to the environmental temperature, and
(ii) in addition, it is necessary to keep the temperature of a LED mounting board on which the LED light source is mounted constant and to keep the temperature of the LED light source constant.
(iii) Further, in order to prevent condensation on the LED light source, it is necessary to prevent ambient temperatures of the LED mounting board and the LED light source from decreasing.

Therefore, an object of the present disclosure is to provide an analysis device including an LED light source capable of suppressing changes in an emission spectrum and a light amount and preventing condensation.

### Solution to Problem

An analysis device of the present disclosure includes a light-emitting diode (LED) light source configured to generate light with which a sample is irradiated, an LED mounting board on which the LED light source and a temperature sensor are mounted, a lamp house configured to surround a periphery of the LED mounting board and contain the LED mounting board, a Peltier element configured to absorb heat of the LED mounting board or dissipate heat to the LED mounting board, and a control unit configured to control an output from the Peltier element so that a temperature measured by the temperature sensor becomes higher than a threshold temperature.

### Advantageous Effects of Invention

According to the present disclosure, the changes in the emission spectrum and the light amount of the LED light source can be suppressed, and condensation can be prevented. Problems, configurations, and effects other than those described above will be clarified by the following description of embodiments.

### Brief Description of Drawings

FIG. 1A is a schematic diagram illustrating an overall configuration example of an analysis device according to a first embodiment.
FIG. 1B is a hardware block diagram of a control circuit according to the first embodiment.
FIG. 2 is a diagram illustrating a configuration example of an absorbance measurement unit that conducts an absorption analysis with the analysis device according to the first embodiment.
FIG. 3 illustrates an example of a detailed configuration of a light source unit according to the first embodiment.
FIG. 4 is a flowchart illustrating an example of a temperature control method of a light-emitting diode (LED) mounting board according to the first embodiment.
FIG. 5 illustrates an example of a detailed configuration of a light source unit according to a second embodiment.
FIG. 6 illustrates an example of a detailed configuration of a light source unit according to a third embodiment.
FIG. 7 illustrates an example of a detailed configuration of a light source unit according to a fourth embodiment.
FIG. 8 is a flowchart illustrating an example of a temperature control method of an LED mounting board according to a fifth embodiment.

### Description of Embodiments

Embodiments of the present disclosure will be described in detail with reference to the drawings. In the following embodiments, it goes without saying that components (including element steps and the like) are not necessarily essential unless otherwise specified or considered to be obviously essential in principle.

Hereinafter, the embodiments of the present disclosure will be described with reference to the drawings.

### <First embodiment>

### (Analysis device 100)

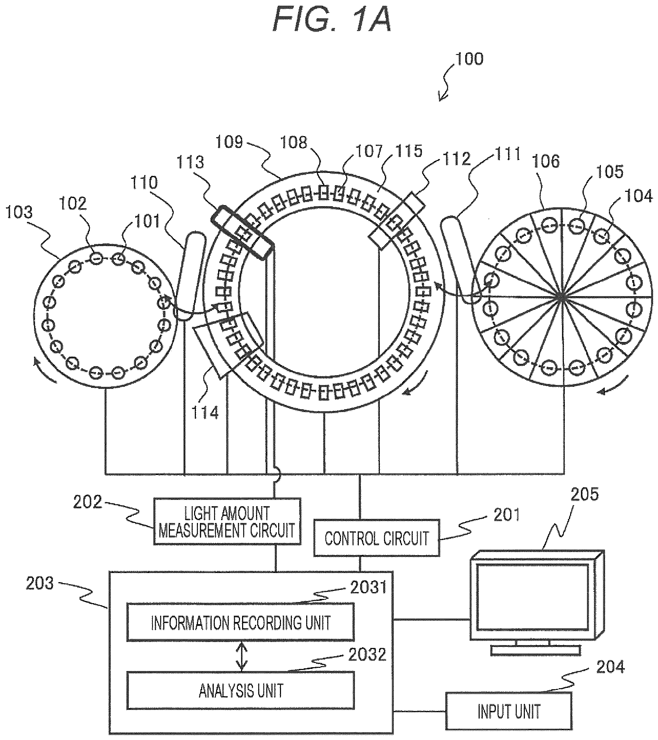

FIG. 1A is a schematic diagram illustrating an overall configuration example of the analysis device using the absorption analysis according to a first embodiment. The analysis device 100 according to the present configuration example includes three types of disks including a sample disk 103, a reagent disk 106, and a reaction disk 109, a dispensing mechanism that moves a sample (also referred to as a sample or a specimen) and a reagent between these disks, a control circuit (control unit) 201 that controls these disks and the mechanism, a light amount measurement circuit 202 that measures absorbance of a reaction solution, a data processing unit 203 that processes data measured by the light amount measurement circuit 202, and an input unit 204 and an output unit 205 that are interfaces with respect to the data processing unit 203. The dispensing mechanism includes a sample dispensing mechanism 110 and a reagent dispensing mechanism 111.

The data processing unit 203 includes an information recording unit 2031 and an analysis unit 2032. The information recording unit 2031 stores control data, measurement data, data used for data analysis, analysis result data, and the like. The data processing unit 203 may be implemented by using a computer. The computer includes at least a processor, such as a central processing unit (CPU), and an information recording unit 2031. The processing of the analysis unit 2032 may be implemented by storing program codes associated with the data processing in the information recording unit 2031 and by the processor executing the program codes.

The input unit 204 and the output unit 205 input and output data to and from the information recording unit 2031. The input unit 204 is an information input device such as a keyboard, a touch panel, or a numeric keypad. The output unit 205 is a device for a user of the analysis device to check the analysis result, and is, for example, a display or the like.

On the circumference of the sample disk 103, a plurality of sample cups 102, which is storage containers for the samples 101, is disposed. The sample 101 is, for example, blood. On the circumference of the reagent disk 106, a plurality of reagent bottles 105, which are storage containers for the reagent 104, are disposed. A plurality of reaction cells 108, which is storage containers of the reaction solution 107 obtained by mixing the sample 101 and the reagent 104, is disposed on the circumference of the reaction disk 109.

The sample dispensing mechanism 110 is a mechanism used when a certain amount of the sample 101 is moved from the sample cups 102 to the reaction cells 108. The sample dispensing mechanism 110 includes, for example, a nozzle for discharging or aspirating a solution, a robot that positions and conveys the nozzle to a predetermined position, a pump that discharges or aspirates a solution from or to the nozzle, and a channel connecting the nozzle and the pump.

The reagent dispensing mechanism 111 is a mechanism used when constant amounts of the reagents 104 are moved from the reagent bottles 105 to the reaction cells 108. The reagent dispensing mechanism 111 also includes, for example, a nozzle for discharging or aspirating a solution, a robot that positions and conveys the nozzle to a predetermined position, a pump that discharges or aspirates a solution from or to the nozzle, and a channel connecting the nozzle and the pump.

A solution stirring unit 112 is a mechanism unit that stirs and mixes the samples 101 and the reagents 104 in the reaction cells 108. A reaction cell cleaning unit 114 is a mechanism unit that discharges the reaction solutions 107 from the reaction cells 108 where the analysis processing has been completed, and then cleans the reaction cells 108. A next sample 101 is dispensed again from the sample dispensing mechanism 110 to the reaction cells 108 after completion of cleaning. A new reagent 104 is dispensed from the reagent dispensing mechanism 111 to be used for another reaction processing.

In the reaction disk 109, the reaction cells 108 are immersed in thermostatic circulating water 115 in a thermostatic water bath where a temperature and a flow rate are controlled. Therefore, the temperatures of the reaction cells 108 and the reaction solutions 107 therein are maintained at a constant temperature by the control circuit 201 even during the movement by the reaction disk 109. An absorbance measurement unit (absorptiometer) 113 that conducts the absorption analysis in the analysis device is disposed on a part of the circumference of the reaction disk 109.

### (Control circuit 201)

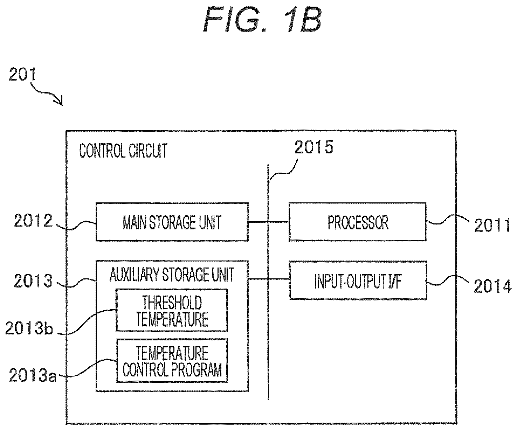

FIG. 1B is a hardware block diagram of the control circuit according to the first embodiment. The control circuit 201 includes a processor 2011, a main storage unit 2012, an auxiliary storage unit 2013, an input-output interface 2014, and a bus 2015 that connects the above-described modules.

The processor 2011 is a central processing unit that controls the operations of the respective units of control circuit 201. The processor 2011 is a CPU, a digital signal processor (DSP), an application specific integrated circuit (ASIC), or the like. The processor 2011 develops the program stored in the auxiliary storage unit 2013 in a work area of the main storage unit 2012 in an executable manner. The main storage unit 2012 stores a program executed by the processor 2011, data processed by the processor, and the like. The main storage unit 2012 is a flash memory, a random access memory (RAM), or the like. The auxiliary storage unit 2013 stores various programs and various data. The auxiliary storage unit 2013 stores, for example, an operating system (OS), various programs such as a temperature control program 2013a, and various data such as a threshold temperature 2013b. The auxiliary storage unit 2013 is a silicon disk including a nonvolatile semiconductor memory (flash memory, erasable programmable read-only memory (EPROM), a solid state drive device, a hard disk (HDD) device, or the like.

### (Absorbance measurement unit 113)

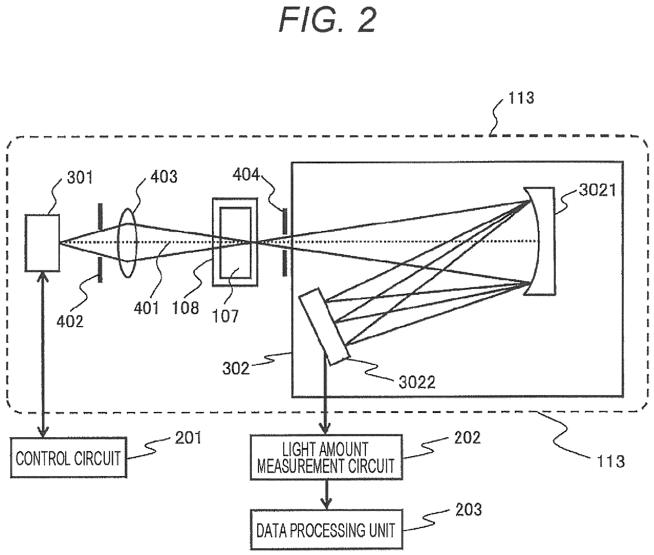

FIG. 2 is a diagram illustrating a configuration example of the absorbance measurement unit that conducts an absorption analysis with the analysis device according to the first embodiment. The irradiation light generated from the light source unit 301 for absorption analysis is emitted along an optical axis 401, focused by a focusing lens 403, and applied to the reaction cells 108. At this time, a light source-side slit 402 may be provided in order to make the light amount distribution in a light-irradiation plane uniform, and the width of the emitted light from the light source unit 301 may be limited.

The light transmitted through the reaction solutions 107 in the reaction cells 108 is dispersed by a diffraction grating 3021 in a spectrometer 302 and received by a detector array 3022 including a large number of light receivers. At this time, since light that has not passed through the reaction solution 107 causes noise, a spectrometer-side slit 404 may be disposed to prevent such stray light from entering the spectrometer 302.

Examples of the measurement wavelength received by the detector array 3022 include 340 nm, 376 nm, 405 nm, 415 nm, 450 nm, 480 nm, 505 nm, 546 nm, 570 nm, 600 nm, 660 nm, 700 nm, 750 nm, and 800 nm. The light reception signals from an optical receiver are transmitted to the information recording unit 2031 of the data processing unit 203 through the light amount measurement circuit 202.

The amounts of components such as proteins, sugars, and lipids contained in the sample 101 are calculated by the following procedure. First, the control circuit 201 instructs the reaction cell cleaning unit 114 to clean the reaction cells 108. The control circuit 201 then causes the sample dispensing mechanism 110 to pipet a constant amount of the samples 101 in the sample cups 102 into the reaction cells 108. The control circuit 201 then causes the reagent dispensing mechanism 111 to pipet the constant amounts of the reagents 104 in the reagent bottles 105 into the reaction cells 108.

At the time of dispensing each solution, the control circuit 201 rotationally drives the sample disk 103, the reagent disk 106, and the reaction disk 109 with the corresponding drive units. At this time, the sample cups 102, the reagent bottles 105, and the reaction cells 108 are positioned at predetermined dispensing positions in accordance with corresponding drive timings of the dispensing mechanisms.

Subsequently, the control circuit 201 causes the solution stirring unit 112 to stir the samples 101 and the reagents 104 dispensed respectively into the reaction cells 108, thereby generating the reaction solutions 107. The rotation of the reaction disk 109 causes the reaction cells 108 containing the reaction solutions 107 to pass through the measurement position where the absorbance measurement unit 113 is disposed. Each time the reaction cell 108 passes through the measurement position, the amount of transmitted light from the reaction solution 107 contained in that reaction cell 108 is measured via the absorbance measurement unit 113. The measurement data is sequentially output to the information recording unit 2031 and accumulated as reaction process data.

During the accumulation of the reaction process data, if necessary, another reagent 104 is additionally dispensed into the reaction cells 108 by the reagent dispensing mechanism 111, stirred by the solution stirring unit 112, and further measured for a constant period of time. As a result, reaction process data acquired at regular time intervals is stored in the information recording unit 2031.

### (Light source unit 301)

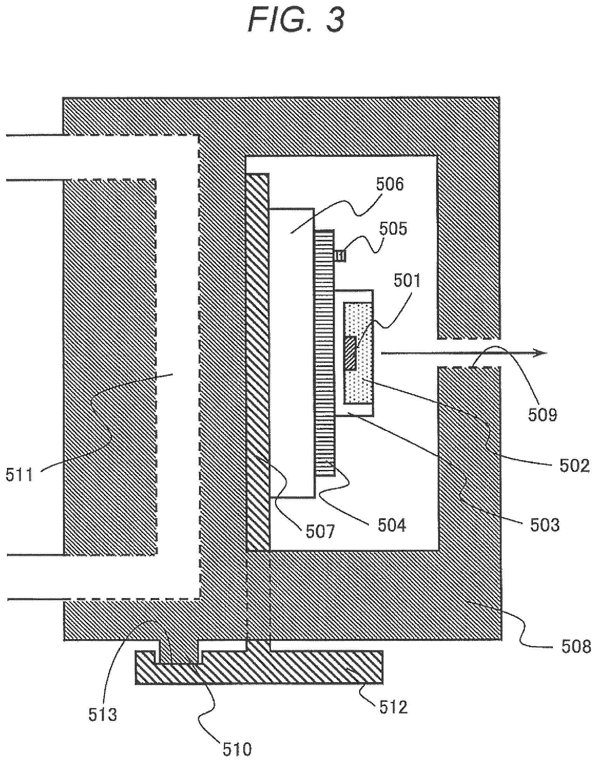

FIG. 3 illustrates an example of a detailed configuration of the light source unit according to the first embodiment. In the following description, as illustrated in the drawings, the light emission side is referred to as an "emission side", and the opposite side is referred to as a "back side". The phosphor 502 is excited by the light generated from an excitation light LED 501, and light is emitted from the phosphor 502. The excitation light LED 501 and the phosphor 502 are mounted on an LED package 503. The LED package 503 is mounted on an LED mounting board 504.

A temperature sensor 505 as well as the LED package 503 is mounted on the LED mounting board 504. The LED mounting board 504 is a metal-based board using aluminum, copper, or the like with good thermal conductivity. The temperature sensor 505 is, for example, a thermistor, a thermocouple, a resistance thermometer sensor, or a semiconductor sensor. The heat absorbing side of a Peltier element 506 comes in contact with the back surface of the LED mounting board 504. The heat dissipation side of the Peltier element 506 comes in contact with a sub-base 507. The sub-base (holding member) 507 is detachable from a lamp house 508 and holds the LED mounting board 504 and the like. The Peltier element 506 absorbs heat of the LED mounting board 504 or dissipates heat to the LED mounting board 504. The sub-base 507 comes in contact with the inner wall of the lamp house 508. Therefore, the sub-base 507 and the lamp house 508 have the same temperature. The sub-base 507 is desirably made of metal from the viewpoint of thermal conductivity, and aluminum, copper, stainless steel, or the like is a candidate for the member.

A through hole 509 through which the light emitted from the phosphor 502 passes is provided on the emission side of the lamp house 508. Optical systems, such as the focusing lens 403, a light beam cut filter, the light source-side slit 402, and the spectrometer-side slit 404, may be provided in the through hole 509. With this configuration, the airtightness of air inside the lamp house 508 is improved by the optical systems provided in the through hole 509, and the characteristics of the emitted light can be adjusted.

The structure of the contact portion between the lamp house 508 and the sub-base 507 will be described. As illustrated in FIG. 3, a protrusion 510 protruding outward is provided on an outer wall surface of the lamp house 508. A notch 513 is provided at a position corresponding to the protrusion 510 of a flange portion 512 of the sub-base 507. When the protrusion 510 comes in contact to the notch 513, the position of the sub-base 507 is determined with respect to the lamp house 508.

As the lamp house 508, one having good thermal conductivity such as a metal block is used. A channel 511 for the thermostatic circulating water 115 is provided inside the lamp house 508. The channel 511 is a thermostatic mechanism that keeps the temperature of the lamp house 508 constant. The thermostatic circulating water 115 is thermostatic circulating water circulating in the thermostatic water bath of the reaction disk 109 illustrated in FIG. 1A, and is adjusted to, for example, 37±0.1°C. The channel 511 is made of, for example, stainless steel. The metal block of the lamp house 508 is, for example, copper. The constituent materials of the channel 511 and the lamp house 508 are not limited to the above, and may be other metals, ceramics, resin, or the like as long as corrosion resistance and thermal conductivity can be secured.

In order to prevent condensation on the excitation light LED 501 and the phosphor 502, the temperature of the LED mounting board 504 is desirably higher than the temperature of the lamp house 508 (here, close to 37°C of the thermostatic circulating water), and is, for example, 40°C or higher. In order not to exceed the maximum allowable value of the junction temperature of the excitation light LED 501, the temperature of the LED mounting board 504 is desirably, for example, 60°C or lower. If the airtightness in the lamp house 508 is increased, the possibility of condensation decreases even when the temperature of the LED package 503 is 40°C or lower. However, in consideration of the exchangeability of the LED package 503, it is difficult to completely prevent exchange of air inside and outside the lamp house 508. In order to generally prevent condensation, it is desirable that the temperature of the LED mounting board 504 is higher than the temperature of the lamp house 508. In particular, in an automatic analysis device that measures the amount of a component contained in a sample such as blood or urine, thermostatic circulating water in the thermostatic water bath whose temperature and flow rate are controlled is often abundantly present in the device, and the humidity is high. Therefore, it is effective to keep the temperature of the LED mounting board 504 higher than the temperature of the lamp house 508 for preventing condensation. In a case where the reaction disk rotates, the surrounding air may circulate to cause high temperature and humidity in the analysis device.

### (Temperature control method of LED mounting board 504)

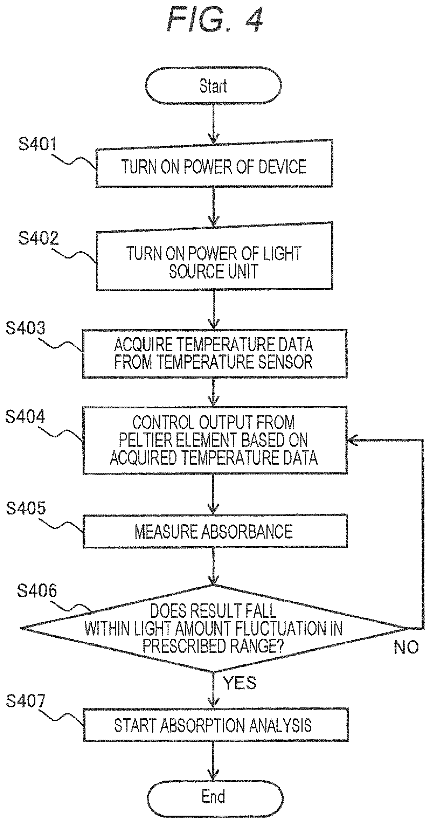

FIG. 4 is a flowchart illustrating an example of a temperature control method of the LED mounting board according to the first embodiment. In order to stably obtain the analysis performance of the absorption analysis with the analysis device 100, it is preferable that the amount of light emitted from the LED package 503 is always constant. As means for keeping the light amount constant, according to the configuration of the present disclosure, the output from the Peltier element 506 is controlled based on the temperature of the LED mounting board 504, the temperature being measured by the temperature sensor 505. The processor 2011 of the control circuit 201 executes the temperature control program 2013a to execute the processing in steps S403 to S407 in FIG. 4.

As illustrated in the flowchart of FIG. 4, in the absorption analysis with the analysis device 100 of FIG. 1A, the user turns on the power of the device (step S401). As a result, the control circuit 201 and the like are energized, and the control circuit 201 and the like are activated. Further, the user turns on the power of the light source unit 301 (step S402). As a result, the excitation light LED 501 emits light. Note that the power of the light source unit 301 may be turned on in conjunction with turning on the power of the device.

The control circuit 201 that has been activated acquires temperature data measured by the temperature sensor 505 (step S403). The control circuit 201 then controls the output from the Peltier element 506 based on the temperature data acquired from the temperature sensor 505 (step S404) . Specifically, the control circuit 201 controls the output from the Peltier element 506 so that the temperature measured by the temperature sensor 505 becomes higher than a threshold temperature Th. The threshold temperature Th is, for example, the threshold temperature 2013b stored in the auxiliary storage unit 2013.

The threshold temperature Th may be a preset value V. The threshold temperature Th may also be a value (Th = S (for example, 37°C) + α (for example, 13°C)) depending on a set temperature S for adjusting the temperature of the thermostatic circulating water 115. The threshold temperature Th may also be a value (Th = Tw + α) determined based on a temperature Tw measured by a thermometer that measures the temperature of the thermostatic circulating water 115. The threshold temperature Th may also be a value (Th = Tl + α) determined based on a temperature T1 measured by a thermometer that measures the temperature of the lamp house 508. The temperature data used by the control circuit 201 may be not only the temperature measured by the temperature sensor 505 installed in the light source unit 301 but also a temperature obtained by another temperature sensor measuring a device environmental temperature.

Next, the control circuit 201 controls the operation of the absorbance measurement unit 113 to conduct absorbance measurement (step S405). The light amount measurement circuit 202 stores the light amount data obtained by the absorbance measurement in the information recording unit 2031. The control circuit 201 then acquires the light amount data from the information recording unit 2031. The control circuit 201 then determines whether the light amount data falls within a light amount fluctuation in a prescribed range required for absorption analysis (step S406). As a result of the determination, in a case where the light amount data does not fall within the light amount fluctuation in the prescribed range (step S406: No), the control circuit 201 returns to the processing in step S404 and controls the output from the Peltier element 506 based on the temperature data acquired from the temperature sensor 505.

As a result of the determination, in a case where the light amount data falls within the light amount fluctuation in the prescribed range (step S406: Yes), the absorption analysis is started (step S407).

### (Experimental results)

A blue LED having a center wavelength of 385 nm was used as the excitation light LED 501. A white LED (driven at a current of 400 mA) using the phosphor 502 excited by the excitation light was used. The LED package 503 was mounted on the LED mounting board 504 as in the configuration example of FIG. 3. The output from the Peltier element 506 was controlled using a thermistor as the temperature sensor 505.

The threshold temperature Th of the thermistor during the operation of the Peltier element 506 was set to 50.0°C. The LED mounting board 504 was an aluminum board on which pattern wiring was formed via an insulating film (resist). When the excitation light LED 501 was turned on, the temperature fluctuation range of the LED mounting board 504 was compared between a case where the Peltier element 506 was operated and a case where it was not operated. As a result, as shown in Table 1, the temperature fluctuation range was less than 0.01°C when the Peltier element 506 was operated, whereas the temperature fluctuation range was 0.05°C when the Peltier element 506 was not operated. From this result, it was confirmed that the temperature of the LED mounting board 504 was kept constant by the operation of the Peltier element 506. Even when the Peltier element 506 was not in operation, a temperature fluctuation range was 0.05°C which was comparatively small, and the periphery of the LED was surrounded by the lamp house 508. Therefore, it was considered that the temperature of the LED mounting board 504 was less susceptible to the ambient temperature outside the lamp house. Note that since the control temperature of the LED mounting board 504 was set to 50.0°C, no condensation was observed in the LED light source.

**[Table 1]**

| Condition | Temperature fluctuation range of LED mounting board |
|---|---|
| (1) Peltier element was operated | less than 0.01°C |
| (2) Peltier element was not operated | 0.05°C |

### (Effects of first embodiment)

Since the lamp house 508 surrounds the periphery of the LED mounting board 504 and contains the LED mounting board 504, the periphery of the LED package 503 is less susceptible to an environmental temperature. Controlling the output from the Peltier element 506 makes it possible to keep the temperature of the LED mounting board 504 on which the LED package 503 is mounted constant. As a result, the changes in the emission spectrum and the light amount of the emitted light from the LED package 503 can be suppressed.

When output from the Peltier element 506 is controlled so that the temperature measured by the temperature sensor 505 becomes higher than the threshold temperature, the amount of saturated water vapor in the lamp house 508 increases. This can prevent condensation on the LED package 503.

The channel 511 is formed in the lamp house 508, and the thermostatic circulating water 115 is allowed to flow in the channel 511, so that the temperature of the lamp house 508 can be kept constant. This can suppress the influence of the environmental temperature on the lamp house 508.

The Peltier element 506 is disposed between the LED mounting board 504 and the sub-base 507 in contact with the inner wall of the lamp house 508. As a result, heat can be easily transferred between the lamp house 508 and the LED mounting board 504, and the temperature of the LED mounting board 504 can be kept constant.

The position of the sub-base 507 with respect to the lamp house 508 can be determined by making the notch 513 of the sub-base 507 touch the protrusion 510 of the lamp house 508. As a result, the position of the LED package 503 held in the sub-base 507 is determined, the position of the phosphor 502 held on the LED package 503 is determined, and the optical axis of the emitted light can be easily determined.

Providing the optical systems in the through hole 509 of the lamp house 508 improves the airtightness of the lamp house 508.

By setting the threshold temperature Th to a temperature between 40°C to 60°C higher than that of the lamp house 508, it is possible to prevent condensation of the excitation light LED 501 and the phosphor 502 at a temperature lower than the junction temperature of the excitation light LED 501.

### <Second embodiment>

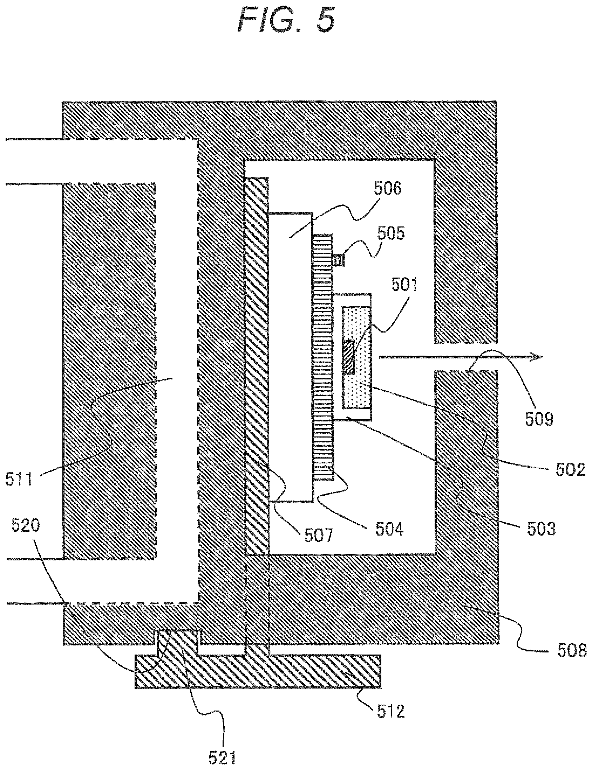

FIG. 5 illustrates an example of a detailed configuration of a light source unit according to a second embodiment. The structure of the contact portion between the lamp house 508 and the sub-base 507 is different between the first embodiment and the second embodiment. As illustrated in FIG. 5, in the second embodiment, the notch 520 is provided on an outer wall surface of the lamp house 508. A protrusion 521 is provided at a position corresponding to the notch 520 of a flange portion 512 of the sub-base 507. When the protrusion 521 comes into contact with the notch 520, the position of the sub-base 507 is determined with respect to the lamp house 508. Since a part of the structure other than the contact portion described above is similar to that of the first embodiment, the description thereof will be omitted.

### (Effects of second embodiment)

The position of the sub-base 507 with respect to the lamp house 508 can be determined by making the protrusion 521 of the sub-base 507 touch the notch 520 of the lamp house 508. As a result, the position of the LED package 503 held in the sub-base 507 is determined and the position of the phosphor 502 held on the LED package 503 is determined. Therefore, the optical axis of the emitted light can be easily determined.

<Third embodiment>

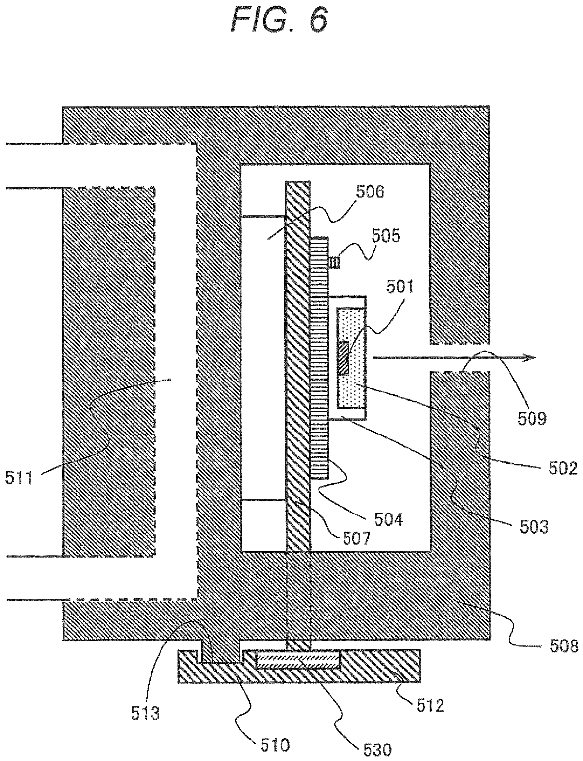

FIG. 6 illustrates an example of a detailed configuration of a light source unit according to a third embodiment. In the third embodiment, unlike the first embodiment, the sub-base 507 has a heat insulating portion 530. The heat insulating portion 530 is provided between a portion holding the LED mounting board 504 and a portion in contact with the lamp house 508. This heat insulating portion 530 thermally interrupts a portion in contact with the LED mounting board 504 and the heat absorbing side of the Peltier element 506 to conduct heat, and a portion in contact with the lamp house 508 and the heat dissipating side of the Peltier element 506 to conduct heat. The heat insulating portion 530 is made of resin or the like having low thermal conductivity. With this structure, the Peltier element 506 can transfer the heat of the LED mounting board 504 to the inner wall of the lamp house 508 via the sub-base 507. The heat insulating portion 530 interferes heat transfer from the flange portion 512 of the sub-base 507 to the lamp house 508.

The Peltier element 506 is fixed in the lamp house 508. The sub-base 507 is configured to be detachable from the lamp house 508 with the Peltier element 506 being left in the lamp house 508. As a result, for example, even when the LED mounting board 504 and the sub-base 507 are removed from the lamp house 508 due to the lifetime of the excitation light LED 501 and the LED package 503 and the LED mounting board 504 are replaced, it is not necessary to remove the Peltier element 506 from the inside of the lamp house 508. Since the other part of the configuration is similar to that in the first embodiment, the description thereof will be omitted.

### (Effects of third embodiment)

The Peltier element 506 is brought into contact with the inner wall of the lamp house 508 and the sub-base 507 and the heat insulating portion 530 is provided. Thereby, heat can be efficiently transferred between the LED mounting board 504 and the inner wall of the lamp house 508. Thus, the temperature of the LED package 503 can be easily kept constant and higher than the threshold temperature.

### <Fourth embodiment>

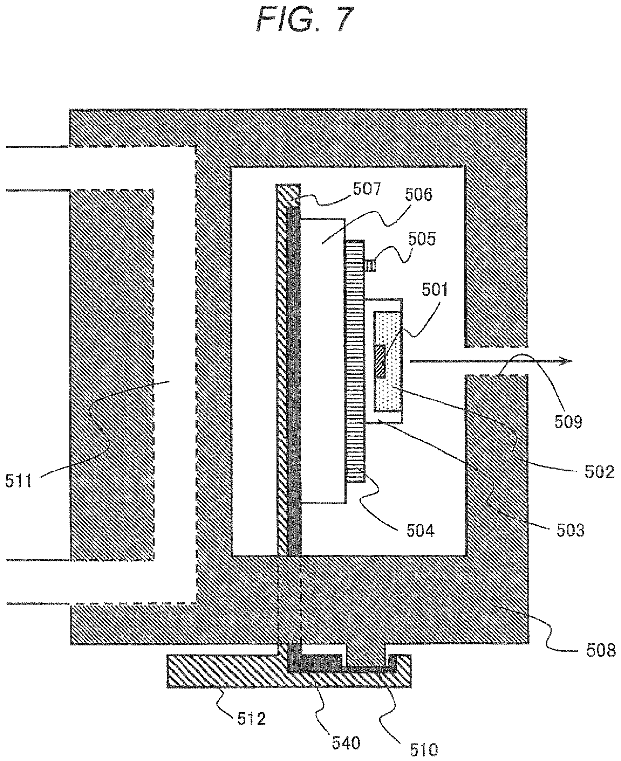

FIG. 7 illustrates an example of a detailed configuration of a light source unit according to a fourth embodiment. In the fourth embodiment, the back side of the sub-base 507 does not comes in contact with the inner wall of the lamp house 508. In the fourth embodiment, heat is conducted from the LED mounting board 504 to the lamp house 508 via the flange portion 512 of the sub-base 507. With this structure, the thermal conductivity does not have to be improved by bringing the back surface side of the sub-base 507 into contact with the inner wall of the lamp house 508. Thus, the LED package 503 and the LED mounting board 504 can be replaced only by pulling out the sub-base 507 toward the flange portion 512. Further, a heat conducting path 540 made of a member having high thermal conductivity such as copper is provided in the sub-base 507. Thereby, heat conductivity from the heat dissipation portion of the Peltier element 506 to the lamp house 508 is improved, and temperature controllability of the Peltier element 506 can be improved. Since the other part of the configuration is similar to that in the first embodiment, the description thereof will be omitted.

### (Effects of fourth embodiment)

By attaching the sub-base 507 to the lamp house 508 without contacting with the inner wall of the lamp house 508, the detachability of the sub-base 507 is improved. Further the temperature of the LED mounting board 504 can be easily controlled by providing the heat conducting path 540.

### <Fifth embodiment>

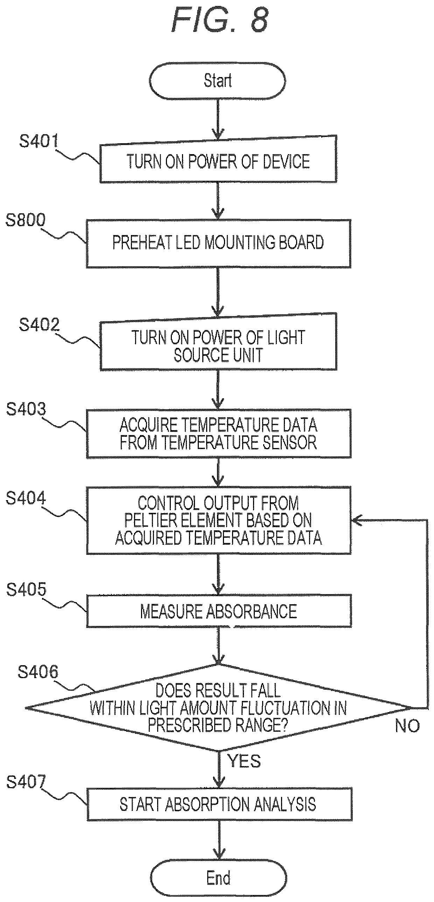

FIG. 8 is a flowchart illustrating an example of a temperature control method of an LED mounting board according to a fifth embodiment. In the fifth embodiment, the LED mounting board 504 is preheated in order to shorten the time from when the excitation light LED 501 is turned on until the emitted light from the excitation light LED 501 is stabilized. As illustrated in the flowchart of FIG. 8, in the absorption analysis with the analysis device 100 of FIG. 1A, a user turns on the power of the device (step S401). As a result, the control circuit 201 and the like are energized, and the control circuit 201 and the like are activated. Thereafter, the user turns on the power of the light source unit 301 (step S402). In fifth embodiment, before the user turns on the power of the light source unit 301, the control circuit 201 controls the output from the Peltier element 506 based on the temperature data acquired from the temperature sensor 505, and preheats the LED mounting board 504 (step S800). Since the processing thereafter is similar to that in the first embodiment, the description thereof will be omitted.

### (Effects of fifth embodiment)

In the fifth embodiment, by preheating the LED mounting board 504, the output from the Peltier element 506 is smaller than that in a case where preheating is not performed, and the time to temperature stabilization is also shortened.

Note that the present disclosure is not limited to the above-described embodiments, and includes various modifications. For example, the above-described embodiments have been described in detail for easy understanding of the present disclosure, and are not necessarily limited to those having all the described configurations. A part of the configuration of one embodiment can be replaced with the configuration of another embodiment, and the configuration of the another embodiment can be added to the configuration of one embodiment. The another configuration can be added to and deleted from a part of the configuration in each embodiment, and a part of the configuration in each embodiment can be replaced with the another configurations. Reference Signs List

100 analysis device
101 sample
102 sample cup
103 sample disk
104 reagent
105 reagent bottle
106 reagent disk
107 reaction solution
108 reaction cell
109 reaction disk
110 sample dispensing mechanism
111 reagent dispensing mechanism
112 solution stirring unit
113 absorbance measurement unit
114 reaction cell cleaning unit
115 thermostatic circulating water
201 control circuit
2011 processor
2012 main storage unit
2013 auxiliary storage unit
2013a temperature control program
2013b threshold temperature
2014 input-output interface
2015 bus
202 light amount measurement circuit
203 data processing unit
2031 information recording unit
2032 analysis unit
204 input unit
205 output unit
301 light source unit
302 spectrometer
3021 diffraction grating
3022 detector array
401 optical axis
402 light source-side slit
403 focusing lens
404 spectrometer-side slit
501 excitation light LED
502 phosphor
503 LED package
504 LED mounting board
505 temperature sensor
506 Peltier element
507 sub-base
508 lamp house
510, 521 protrusion
513, 520 notch
511 channel
530 heat insulating portion
540 heat conducting path

## Claims

1. An analysis device comprising:
a light-emitting diode (LED) light source that generates light with which a sample is irradiated;
an LED mounting board on which the LED light source and a temperature sensor are mounted;
a lamp house configured to surround a periphery of the LED mounting board and contain the LED mounting board;
a Peltier element configured to absorb heat of the LED mounting board or dissipate heat to the LED mounting board; and
a control unit configured to control an output from the Peltier element so that a temperature measured by the temperature sensor becomes higher than a threshold temperature.

2. The analysis device according to claim 1, further comprising a thermostatic mechanism configured to keep a temperature of the lamp house constant.

3. The analysis device according to claim 1, wherein the Peltier element is disposed between an inner wall of the lamp house and the LED mounting board.

4. The analysis device according to claim 1, further comprising a holding member configured to be detachable from the lamp house and hold the LED mounting board,
wherein the holding member has a notch, and
the lamp house has a protrusion to touch the notch.

5. The analysis device according to claim 1, further comprising a holding member configured to be detachable from the lamp house and hold the LED mounting board,
wherein the lamp house has a notch, and
the holding member has a protrusion that comes into contact with the notch.

6. The analysis device according to claim 1, further comprising a holding member configured to be detachable from the lamp house and hold the LED mounting board,
wherein the Peltier element is brought into contact with an inner wall of the lamp house and the holding member, and
the holding member includes a heat insulating portion provided between a portion that holds the LED mounting board and a portion that comes in contact with the lamp house.

7. The analysis device according to claim 1, further comprising a holding member configured to be detachable from the lamp house and hold the LED mounting board,
wherein the holding member is attached to the lamp house without contacting with an inner wall of the lamp house.

8. The analysis device according to claim 1, further comprising a holding member configured to be detachable from the lamp house with the Peltier element being left in the lamp house and hold the LED mounting board.

9. The analysis device according to claim 1, wherein
the lamp house includes a through hole through which light emitted from the LED light source passes, and
the through hole has an optical system.

10. The analysis device according to claim 1, wherein the threshold temperature is a temperature determined based on a temperature of the lamp house.

11. The analysis device according to claim 1, wherein the threshold temperature is a temperature between 40°C to 60°C which is higher than a temperature of the lamp house.

12. The analysis device according to claim 1, wherein the control unit is configured to control the output from the Peltier element so as to dissipate heat to the LED mounting board before the LED light source emits light.

13. The analysis device according to claim 1,
wherein the sample is stored in a reaction container,
the analysis device further comprising the reaction container and thermostatic circulating water for keeping the sample in the reaction container at a constant temperature.

14. The analysis device according to claim 13, comprising:
a reaction disk configured to place at least one of the reaction container on a circumference of the reaction disk;
a thermostatic water bath in which the reaction container placed on the reaction disk is immersed in the thermostatic circulating water; and
a control unit configured to rotationally drive the reaction disk.
